# EUROPEAN PATENT SPECIFICATION

(11) **EP 4 533 748 B1**
(45) Date of publication and mention of the grant of the patent: **02.09.2026**
(21) Application number: 23877401.2
(22) Date of filing: 26.04.2023
(51) Int. Cl.: H04L 12/28, H04L 67/50, G01S 13/04, G01S 7/00, G01S 7/41, G01S 13/72, G01S 13/02

(54) **ON-PREMISE RECOMMENDATION SYSTEM FOR A HEALTHIER SMART HOME**
VOR-ORT-EMPFEHLUNGSSYSTEM FÜR EIN GESÜNDERES INTELLIGENTES HEIM
SYSTÈME DE RECOMMANDATION SUR SITE POUR UNE MAISON INTELLIGENTE PLUS SAINE

(30) Priority: 14.10.2022 IN 202241058814
(43) Date of publication of application: 09.04.2025
(73) Proprietor: Samsung Electronics Co., Ltd., Suwon-si, Gyeonggi-do 16677 (KR)
(72) Inventor: AGRAWAL, Rahul, Suwon-si, Gyeonggi-do 16677 (KR); DAS, Kaushik, Suwon-si, Gyeonggi-do 16677 (KR); MOULIK, Sreedeep, Suwon-si, Gyeonggi-do 16677 (KR); NATARAJAN, Muthukumaran, Suwon-si, Gyeonggi-do 16677 (KR); UDESHI, Aneri, Suwon-si, Gyeonggi-do 16677 (KR)
(74) Representative: Appleyard Lees IP LLP
(86) International application number: PCT/KR2023/005697
(87) International publication number: WO 2024/080469

(56) References cited:
- KR-A- 20180 068 823
- US-A1- 2017 181 409
- US-A1- 2020 191 913
- US-A1- 2020 279 653
- PNEVMATIKAKIS ARISTODEMOS ED - CHUNG KYUNGYONG ET AL: "Recognising Daily Functioning Activities in Smart Homes", 4 March 2017, WIRELESS PERSONAL COMMUNICATIONS, SPRINGER, DORDRECHT, NL, PAGE(S) 3639 - 3654, ISSN: 0929-6212, XP036323325
- VICTORIA HODGE: "Analysing Ultra-Wide Band Positioning for Geofencing in a Safety Assurance Context", ARXIV (CORNELL UNIVERSITY), 11 March 2022 (2022-03-11), Ithaca, XP093158920, DOI: 10.48550/arxiv.2203.05830
- SHAOHUA JIANG: "ULTRA-WIDE BAND APPLICATIONS IN INDUSTRY: A CRITICAL REVIEW / ULTRAPLAČIOS JUOSTOS BANGŲ TAIKYMAS PRAMONĖJE: KRITINĖ APŽVALGA", JOURNAL OF CIVIL ENGINEERING AND MANAGEMENT, vol. 17, no. 3, 20 September 2011 (2011-09-20), pages 437 - 444, XP093158923, ISSN: 1392-3730, DOI: 10.3846/13923730.2011.596317
- WALEED UMER: "Use of Ultra Wide Band Real-Time Location System on Construction Jobsites: Feasibility Study and Deployment Alternatives", INTERNATIONAL JOURNAL OF ENVIRONMENTAL RESEARCH AND PUBLIC HEALTH, M D P I AG, SWITZERLAND, vol. 17, no. 7, 1 January 2020 (2020-01-01), Switzerland , pages 2219, XP093158926, ISSN: 1660-4601, DOI: 10.3390/ijerph17072219

## Description

### Technical Field

The present invention relates to hazardous location detection in a smart home environment. In particular, the present invention relates to a method and device for identifying hazardous locations in the smart home environment.

### Background Art

Hazard detection systems are used to detect possible hazards using multiple sensors present in a smart home environment. The hazard detection systems keep tracking multiple hazardous situations and locations within the smart home environment. The hazard detection systems can generate a notification to a user of the smart home environment based on detection of the multiple hazardous situations and locations within the smart home environment.

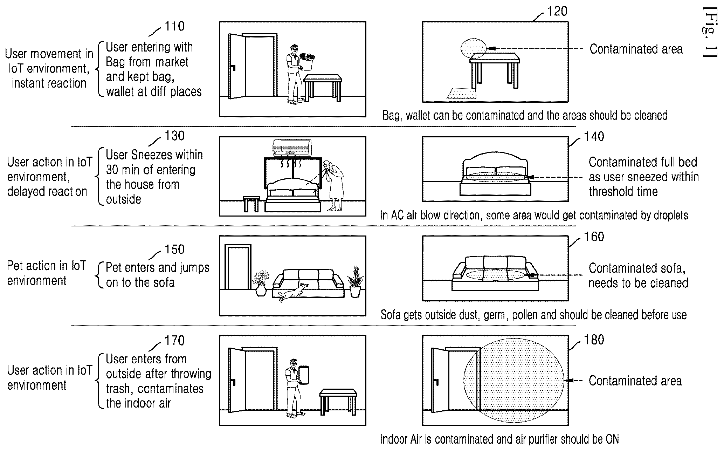

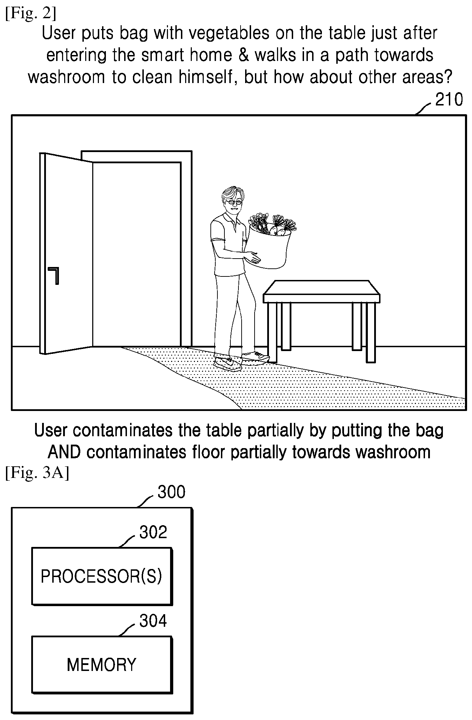

FIG. 1 and FIG. 2 illustrate an example scenario for hazard detection applications in the smart home environment, according to conventional solutions. Consider the smart home environment, where a user is coming from an outside market and enters the smart home environment with a bag. After entering, the user may place the bag, and a wallet at different places in the smart home environment. A monitoring system of the smart home environment keeps tracking multiple hazardous situations that may arise in the smart home environment. Since the user entered the smart home from the outside, placing the bag and the wallet may contaminate the places where it is kept. The monitoring system helps in locating the contaminated locations and notifying the user about the contamination locations.

In a further scenario, another user sneezes within 30 minutes of entering the smart home environment from the outside and may contaminate a bed. In a further scenario, a pet enters the smart home environment and jumps onto the sofa. The pet may contaminate the sofa. In a further scenario, the user comes from outside after disposing of garbage and entering the smart home environment. The user may contaminate an area of the smart home environment. However, the user does not know why and how exposure to the outsidelike going to a market or a shopping mall, meeting people, bringing an outside object into the smart home environment, visiting an outside location, disposing of the garbage, and sneezing might increase the chance of easy spread of contamination to other residents of the smart home environment.

In a further scenario, the user puts a bag with vegetables on a table just after entering the smart home environment and walks on a path toward a washroom to clean himself. However, due to the movement of the user other areas of the home environment may get contaminated. In such a scenario, conventional solutions fail to provide a solution to provide the most suitable cleaning solutions to reduce the contamination due to the movement of the user. Further, the user may sometimes not be aware of possible counter actions and deadlines that should be followed to reduce the chance of spreading the contamination to other residents of the smart home environment.

Therefore, as can be seen from the above, the state-of-the-art solution fails to determine the chance of spreading of the contaminants in the smart home environment and fail to notify the user to take specific action or countermeasures to improve the residents' health and safety.

Therefore, there lies a need for a method and device that can overcome various aforesaid issues. US20200191913 describes a method, apparatus, and system for wireless object scanning. US2020279653 describes estimating impact of property on individual health. PNEVMATIKAKIS ARISTODEMOS, DOI:10.1007/S11277-017-4060-3 describes recognizing daily functioning activities in smart homes.

### Disclosure

### Technical Solution

This summary is provided to introduce a selection of concepts in a simplified format that is further described in the detailed description of the invention. This summary is not intended to identify key or essential inventive concepts of the invention, nor is it intended for determining the scope of the invention which is solely determined by the appended claims.

The method to be performed by an electronic device for identifying potential hazardous locations includes detecting one or more entities in an interior space. The method includes obtaining information associated with at least one outside activity performed by the one or more entities. The method includes monitoring at least one subsequent activity of the one or more entities in the interior space. The method includes identifying at least one potentially hazardous location contaminated by the one or more entities by correlating the at least one subsequent activity with the obtained information.

The electronic device for identifying potential hazardous locations comprises a memory and at least one processor coupled with the memory. The processor is configured to detect one or more entities in interior space. The processor is configured to obtain information associated with at least one outside activity performed by the one or more entities. The processor is configured to monitor at least one subsequent activity of the one or more entities in the interior space. The processor is configured to identify at least one potentially hazardous location contaminated by the one or more entities by correlating the at least one subsequent activity with the obtained information.

A machine-readable medium contains instructions that, when executed, cause at least one processor of a device to perform operations corresponding to the described method above.

To further clarify the advantages and features of the present invention device, a more particular description of the invention will be rendered by reference to specific embodiments thereof, which is illustrated in the appended drawing. It is appreciated that these drawings depict only typical embodiments of the invention and are therefore not to be considered limiting its scope. The invention will be described and explained with additional specificity and detail with the accompanying drawings.

### Description of Drawings

These and other features, aspects, and advantages of the present disclosure will become better understood when the following detailed description is read with reference to the accompanying drawings in which like characters represent like parts throughout the drawings, wherein:
FIG. 1 illustrates an example scenario for hazard detection application in a smart home environment, as per the state-of-the-art solution;
FIG. 2 illustrates an example scenario for hazard detection application in a smart home environment, as per the state-of-the-art solution;
FIG. 3A illustrates a general system architecture for identifying hazardous locations in the smart home environment, in accordance with an embodiment of the disclosure;
FIG. 3B illustrates a schematic block diagram of an electronic device for identifying hazardous locations in the smart home environment, in accordance with an embodiment of the disclosure;
FIG. 4 illustrates a detailed system architecture for identifying hazardous locations in the smart home environment, in accordance with an embodiment of the disclosure;
FIG. 5 illustrates an object identification based on the variability of signal reception & modelling, according to an embodiment of the disclosure;
FIG. 6 illustrates an example scenario for stationary object and obstacle detection, according to an embodiment of the disclosure;
FIG. 7 illustrates an example scenario for identifying hazardous locations in the smart home environment, according to an embodiment of the disclosure;
FIG. 8 illustrates a block diagram of an entry determination unit, according to an embodiment of the disclosure;
FIG. 9 illustrates a block diagram of an outside activity determination unit, according to an embodiment of the disclosure;
FIG. 10 illustrates a block diagram of an exposure determination unit, according to an embodiment of the disclosure;
FIG. 11 illustrates a block diagram of an in-house activity monitor unit, according to an embodiment of the disclosure;
FIG. 12 illustrates a block diagram of a contamination tracker unit, according to an embodiment of the disclosure;
FIG. 13 illustrates a block diagram of an action recommender unit, according to an embodiment of the disclosure;
FIG. 14 illustrates a flow chart for implementation in the electronic device for identifying hazardous locations, according to an embodiment of the disclosure;
FIG. 15 illustrates various examples scenarios for implementation in the system for the electronic device for identifying hazardous locations, according to an embodiment of the disclosure.

Further, skilled artisans will appreciate that elements in the drawings are illustrated for simplicity and may not have necessarily been drawn to scale. For example, the flow charts illustrate the method in terms of the most prominent opeartions involved to help to improve understanding of aspects of the present disclosure. Furthermore, in terms of the construction of the device, one or more components of the device may have been represented in the drawings by conventional symbols, and the drawings may show only those specific details that are pertinent to understanding the embodiments of the present disclosure so as not to obscure the drawings with details that will be readily apparent to those of ordinary skill in the art having the benefit of the description herein.

### Mode for Invention

It should be understood at the outset that although illustrative implementations of the embodiments of the present disclosure are illustrated below, the present disclosure may be implemented using any number of techniques, whether currently known or in existence. The present disclosure should in no way be limited to the illustrative implementations, drawings, and techniques illustrated below, including the exemplary design and implementation illustrated and described herein, but may be modified within the scope of the appended claims along with their full scope of equivalents.

The term "some" as used herein is defined as "none, or one, or more than one, or all." Accordingly, the terms "none," "one," "more than one," "more than one, but not all" or "all" would all fall under the definition of "some." The term "some embodiments" may refer to no embodiments or to one embodiment or to several embodiments or to all embodiments. Accordingly, the term "some embodiments" is defined as meaning "no embodiment, or one embodiment, or more than one embodiment, or all embodiments." The terminology and structure employed herein is for describing, teaching, and illuminating some embodiments and their specific features and elements and do not limit, restrict, or reduce the scope of the claims.

More specifically, any terms used herein such as but not limited to "includes," "comprises," "has," "consists," and grammatical variants thereof do NOT specify an exact limitation or restriction and certainly do NOT exclude the possible addition of one or more features or elements, unless otherwise stated, and furthermore must NOT be taken to exclude the possible removal of one or more of the listed features and elements, unless otherwise stated with the limiting language "MUST comprise" or "NEEDS TO include."

Whether or not a certain feature or element was limited to being used only once, either way, it may still be referred to as "one or more features" or "one or more elements" or "at least one feature" or "at least one element." Furthermore, the use of the terms "one or more" or "at least one" feature or element does NOT preclude there being none of that feature or element, unless otherwise specified by limiting language such as "there NEEDS to be one or more ... " or "one or more element is REQUIRED."

Unless otherwise defined, all terms, and especially any technical and/or scientific terms, used herein may be taken to have the same meaning as commonly understood by one having ordinary skill in the art.

Embodiments of the present disclosure will be described below in detail with reference to the accompanying drawings. The present disclosure provides identification of potentially hazardous locations within an IoT environment. As an example, the Internet-of-Things environment may be, for example, but not limited to a home environment, office environment, or commercial environment, and the like. According to the present disclosure, the method and the system disclosed herein determine detecting an entry of one or more entities into the smart home environment using one or more sensors present in the smart home environment. The method further retrieves information corresponding to an external exposure associated with at least one outside activity performed by the detected one or more entities. Further, the method includes monitoring at least one subsequent activity of the detected one or more entities after entering the smart home environment using the one or more sensors present in the smart home environment. The method further includes identifying at least one potentially hazardous location within the smart home environment, by correlating the monitored at least one subsequent activity with the retrieved information corresponding to the external exposure. Accordingly, the present disclosure takes care of the health and safety of the residents of the smart home environment. A detailed explanation will be provided in the forthcoming paragraphs.

FIG. 1 illustrates an example scenario for hazard detection application in a smart home environment, as per the state-of-the-art solution.

FIG.1 illustrates 4 possible cases of contamination caused by outside activities performed by one or more entities. Consider the smart home environment, where a user is entering with bag from market and put bag and wallet at different places (110). The bag and wallet may contaminate the areas, and the areas should be cleaned (120). A monitoring system of the smart home environment keeps tracking multiple hazardous situations that may arise in the smart home environment. Furthermore, the monitoring system may help in locating the contaminated locations and notifying the user about the contamination locations.

The other scenario would be that user sneezes within 30 minutes of entering the house from outside (130). Furthermore, an air conditioner may be running to blow wind toward the bed where the user sneezes, and the windows are closed. Then the bed may be contaminated as user sneezed within threshold time (140). Also, due to the blow direction of air conditioner, some area are likely to get contaminated by droplets. Then the monitoring system of the smart home environment may notify the user about the contamination locations.

In a further scenario, a pet enters and jumps on the sofa (150). The pet may contaminate the sofa and the floor. Subsequently, the sofa gets outside dust, germ, pollen and should be cleaned before being used by users (160). In another scenario, a user enters from the outside environment after throwing trash, and contaminates the indoor air (170). Then indoor air is contaminated and air purifier should be on (180).

However, the user may not know why and how outside exposure like going to a market or a shopping mall, meeting people, bringing an outside object into the smart home environment, visiting an outside location, disposing of the garbage, and sneezing might increase the chance of easy spread of contamination to other residents of the smart home environment.

FIG. 2 illustrates an example scenario for hazard detection application in a smart home environment, as per the state-of-the-art solution.

In a scenario, the user puts a bag with vegetables on the table just after entering the smart home and walks in a path towards washroom to clean himself (210). Due to the movement of the user, other areas of the home environment may get contaminated. In this scenario, the conventional solutions fail to provide a solution to provide the most suitable cleaning solutions to reduce the contamination due to the movement of the user. The user contaminates the table partially by putting the bag with vegetables and contaminates the floor partially towards washroom. However, with the conventional solution, the user may also not be aware of possible counter actions and deadlines that should be followed to reduce the chance of spreading the contamination to other residents of the smart home environment.

Therefore, as can be seen in FIG. 1 and FIG. 2, the state-of -the-art solution fails to determine the chance of spreading of the contaminants in the smart home environment and fails to notify the user to take specific action or countermeasures to improve the residents' health and safety. The method to identify the possible hazardous locations and provide suitable cleaning solutions according to an embodiment of the disclosure may be described below.

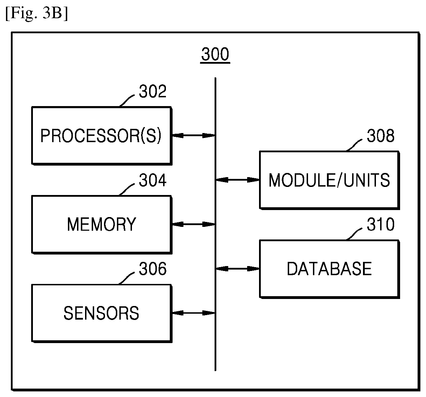

FIG. 3A illustrates a schematic block diagram of an electronic device 300 for identifying hazardous locations in the smart home environment, in accordance with an embodiment of the disclosure. The electronic device 300 includes one or more processor(s) 302, a memory 304. It should be noted that FIG. 3A is merely one example of a particular implementation and is intended to illustrate the types of components that may be included as part of the electronic device 300. FIG. 3B is another example of particular implementation as described below.

According to the invention, the one or more processor(s) 302 are operably coupled with the memory 304 to perform various algorithms, process, or functions. Such programs or instructions executed by the processor(s) 302 may be stored in any suitable article of manufacture that includes one or more tangible, computer-readable media at least collectively storing the instructions or routines, such as the memory 304.

According to the invention, the processor 302 detects one or more entities, and obtains information associated with at least one outside activity performed by the entities. The processor 302 monitors activities of entities in the interior space and identifies at least one potentially hazardous location contaminated by the entities.

The memory 304 may include any non-transitory computer-readable medium known in the art including, for example, volatile memory, such as static random-access memory (SRAM) and dynamic random access memory (DRAM), and/or non-volatile memory, such as read-only memory (ROM), erasable programmable ROM, flash memories, hard disks, optical disks, and magnetic tapes.

In an embodiment of the disclosure, the memory 304 may store the information associated with at least one outside activity performed by entities. The memory 304 may store the properties of the entities which is used for detect the entities in the interior space. The memory 304 may store at least one corrective action for cleaning the inner space and weights of each corrective action.

FIG. 3B illustrates a general system architecture for identifying hazardous locations in the smart home environment, in accordance with an embodiment of the disclosure. FIG. 3B illustrates the electronic device 300 for identifying the hazardous locations within the smart home environment. The electronic device 300 includes one or more processor(s) 302, a memory 304, a module/unit 308, sensors 306, and a database 310 each of which is coupled with each other.

As an example, the electronic device 300 may correspond to various devices such as a personal computer (PC), a tablet PC, a personal digital assistant (PDA), a mobile device, a palmtop computer, a laptop computer, a desktop computer, a communications device, dashboard, navigation device, a computing device, or any other machine capable of executing a set of instructions.

In an example, the processor 302 may be a single processing unit or a number of units, all of which could include multiple computing units. The processor 302 may be implemented as one or more microprocessors, microcomputers, microcontrollers, digital signal processors, central processing units, logical processors, virtual processors, state machines, logic circuitries, and/or any devices that manipulate signals based on operational instructions. Among other capabilities, the processor 302 is configured to fetch and execute computer-readable instructions and data stored in the memory 304.

In an embodiment of the disclosure, the processor 302 may consist of one or more processor(s). The one or more processor(s) 302 may be operably coupled with the memory 304 to perform various algorithms, processes, or functions. Such programs or instructions executed by the processor(s) 302 may be stored in any suitable article of manufacture that includes one or more tangible, computer-readable media at least collectively storing the instructions or routines, such as the memory 304.

According to the invention, the processor 302 detects one or more entities, and obtains information associated with at least one outside activity performed by the entities. The processor 302 monitors subsequent activities of entities in the interior space and identifies at least one potentially hazardous location contaminated by the entities.

The memory 304 may include any non-transitory computer-readable medium known in the art including, for example, volatile memory, such as static random-access memory (SRAM) and dynamic random access memory (DRAM), and/or non-volatile memory, such as read-only memory (ROM), erasable programmable ROM, flash memories, hard disks, optical disks, and magnetic tapes.

In an embodiment of the disclosure, the memory 304 may store the information associated with at least one outside activities performed by entities. And also the memory 304 may store the properties of the entities which is used for detect the entities in the interior space. The memory 304 store at least one corrective action for cleaning the inner space and weights of each corrective action.

In an example, the module(s), engine(s), and/or unit(s) 308 may include a program, a subroutine, a portion of a program, a software component or a hardware component capable of performing a stated task or function. As used herein, the module(s), engine(s), and/or unit(s) 308 may be implemented on a hardware component such as a server independently of other modules, or a module can exist with other modules on the same server, or within the same program. The module (s), engine(s), and/or unit(s) 308 may be implemented on a hardware component such as processor one or more microprocessors, microcomputers, microcontrollers, digital signal processors, central processing units, state machines, logic circuitries, and/or any devices that manipulate signals based on operational instructions. The module (s), engine(s), and/or unit(s) 308 when executed by the processor(s) 302 may be configured to perform any of the described functionalities. According to an embodiment of the present disclosure, the module(s), engine(s), and/or unit(s) 308 may include a monitoring unit, an entry determination unit, an outside activity determination unit, an exposure determination unit, an in-house activity monitoring unit, a contamination tracker unit, action prioritization & recommender unit, and a feedback analyzer unit. Each of the unit's uniquely designed and configured hardware as well as software.

As a further example, the database 310 may be implemented with integrated hardware and software. The hardware may include a hardware disk controller with programmable search capabilities or a software system running on general-purpose hardware. The examples of database are, but not limited to, in-memory database, cloud database, distributed database, embedded database and the like. The database 310 amongst other things, serves as a repository for storing data processed, received, and generated by one or more of the processors, and the modules/engines/units. As a further example, the sensors 306 may include multiple Ultra-wideband (UWB)-based sensors for tracking and identifying one or more entities of the smart home environment. The one or more entities may include but not limited to various stationary and non-stationary objects within the smart home environment.

The modules/engines/units 308 may be implemented with an Al unit that may include a plurality of neural network layers. Examples of neural networks include, but are not limited to, convolutional neural network (CNN), deep neural network (DNN), recurrent neural network (RNN), Restricted Boltzmann Machine (RBM). The learning technique is a method for training a predetermined target device (for example, a robot) using a plurality of learning data to cause, allow, or control the target device to make determination or prediction. Examples of learning techniques include, but are not limited to, supervised learning, unsupervised learning, semi-supervised learning, or reinforcement learning. At least one of a plurality of CNN, DNN, RNN, RMB models and the like may be implemented to thereby achieve execution of the present subject matter's mechanism through an Al model. A function associated with Al may be performed through the non-volatile memory, the volatile memory, and the processor. The processor may include one or a plurality of processors. At this time, one or a plurality of processors may be a general-purpose processor, such as a central processing unit (CPU), an application processor (AP), or the like, a graphics-only processing unit such as a graphics processing unit (GPU), a visual processing unit (VPU), and/or an Al-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. A detailed explanation of each of the aforesaid components as shown in FIG. 3B will be explained in detail in the forthcoming paragraphs.

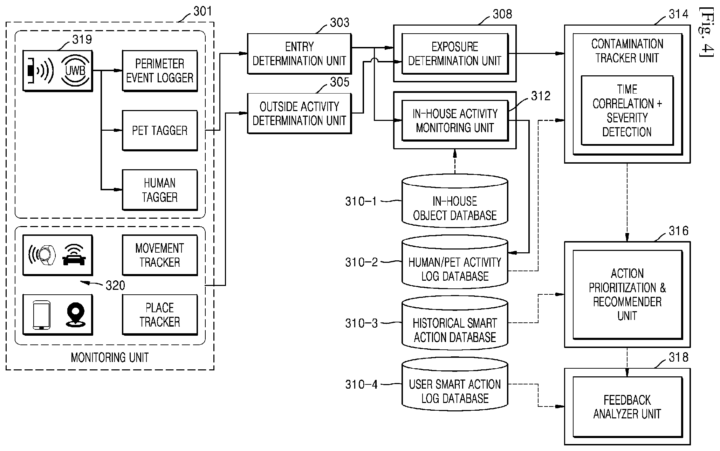

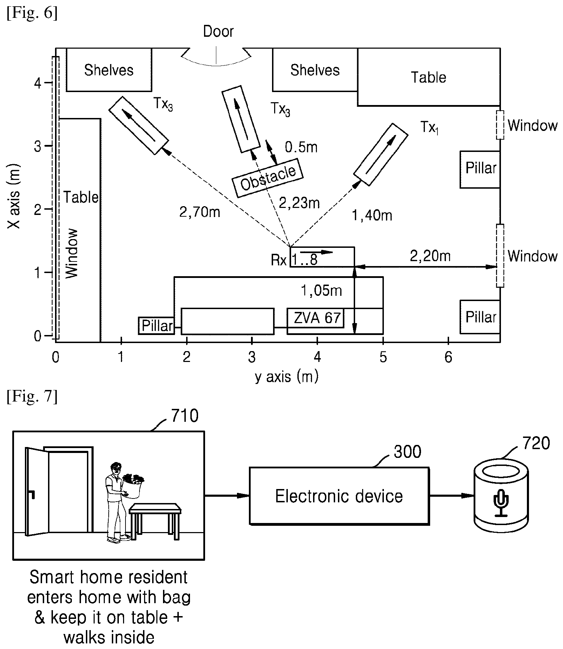

FIG. 4 illustrates a detailed system architecture for identifying the hazardous locations in the smart home environment, in accordance with an embodiment of the disclosure. The electronic device 300 will be explained with respect to FIG. 3A and FIG. 3B. Further, the reference numerals are kept same for the ease of explanation. Further, FIG. 4 will be explained through FIG. 7 for ease of explanation.

According to an embodiment of the present disclosure, the electronic device 300 includes the monitoring unit 301, the entry determination unit 303, the outside activity determination unit 305, the exposure determination unit 308, the in-house activity monitoring unit 312, the contamination tracker unit 314, the action prioritization & recommender unit 316, and the feedback analyzer unit 318 coupled with each other. The models/unit 308 as shown in FIG. 3B may include all the aforesaid units/models. Further, the database 310 may include, for example, but not limited to, an identity classifier parameter database, a location-activity database, a location-hazard mapping database, an in-house object database 310-1, in the house activity logs database, a human/pet activity log database 310-2, a historical smart action database 310-3, and a user smart action log database 310-4.

As shown in FIG. 4, in the smart home environment, the multiple UWB-based sensors 306 keep monitoring the various stationery and non-stationary objects which are present in the multiple UWB-based sensors range in a location boundary for their identification. In a non-limiting example, the various stationery objects and the non-stationary objects may include a user, living beings, non-living beings, objects like tables, shelves, pillars, etc., the object's location, and the context related to the object's locations. In a non-limiting example, the object's location may include a bedroom, kitchen, living room, or the like. The term multiple UWB-based sensors may be alternatively referred as "UWB sensors "throughout the disclosure without deviation from the scope of the embodiments.

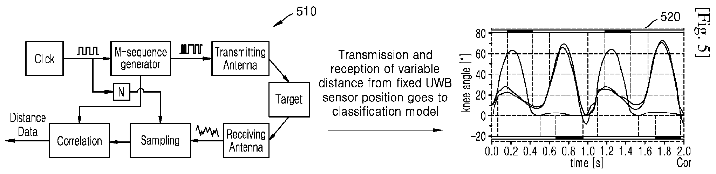

The UWB sensors 306 of the monitoring unit 301, as shown in FIG. 4, may be configured to transmit and receive sensor data from the one or more entities. The received sensor data may be further sent to the monitoring unit 301. The monitoring unit 301 further identifies one or more entities based on received sensor data. As an example, the identified one or more entities may include the various stationary objects or the non-stationary objects. The stationary object may include objects like, but not limited to, non-living beings, tables, shelves, pillars, etc. The non-stationary object may include objects like, but not limited to, a user, living beings, robots, animals, pets, etc. A detailed object identification process will be explained with the help of FIG. 5 and FIG. 6.

FIG. 5 illustrates an example of object identification based on the variability of signal reception & modelling, according to an embodiment of the present disclosure. In a UWB radar-based system of Figure (a) of FIG. 5, signal pulses (Tx) are transmitted to the various stationary and non-stationary objects, and scattered signals (Rx) are received by the antenna. Using various properties of the signal like Signal strength (SS), Time of arrival (ToA), and Angle of arrival (AoA), minute variations of movement can be tracked, and the object's unique physiological properties can be identified. The physiological properties may include, for example, length of the object, a width of the object, a distance of the object with respect to the user or between any other object, gap between the objects, the orientation of the objects, etc. These types of physical features are unique to each of the objects or persons and therefore, a classification type may be tagged with uniquely identifiable items/objects/persons for its identification and stored in an identity classifier parameters database.

The graph 520 of FIG. 5 illustrates a UWB scattered signal variation and propagation geometry of the receiving signal. Thus, the electronic device 300 may precisely understand the position, size, direction, and movement of each of the stationary and non-stationary objects in the location.

FIG. 6 illustrates an example scenario for stationary object and obstacle detection, according to an embodiment of the present disclosure. As can be seen the stationary objects and various obstacles in the location of the smart home environment may be detected based on the UWB scattered signal variation.

According to an embodiment, the monitoring unit 301 as shown in FIG. 4, periodically monitors at least one user's outside activities through the user's electronic device 320. The user's outside activities may include but not limited to visiting different locations like markets, shopping malls, etc., or physical activities like going to gym, etc., or movement outside the smart home environment. In a non-limiting example, the user's electronic device 320 may include a movement tracker device, a place tracker device, a smartwatch, smart wearables, vehicle GPS, etc. Along with at least the one or more users outside activities, the electronic device 320 also stores time spent while performing at least the one or more user's outside activities. Thereafter, monitored at least one user's outside activities information is sent to the outside activity determination unit 305.

FIG. 7 illustrates an example scenario for identifying hazardous locations in the smart home environment, according to an embodiment of the disclosure. Consider a scenario, where the user comes from outside and enters in the smart home environment (710). The user after entering keeps his bag on the table of the smart home environment and walks to other locations inside the smart home environment.

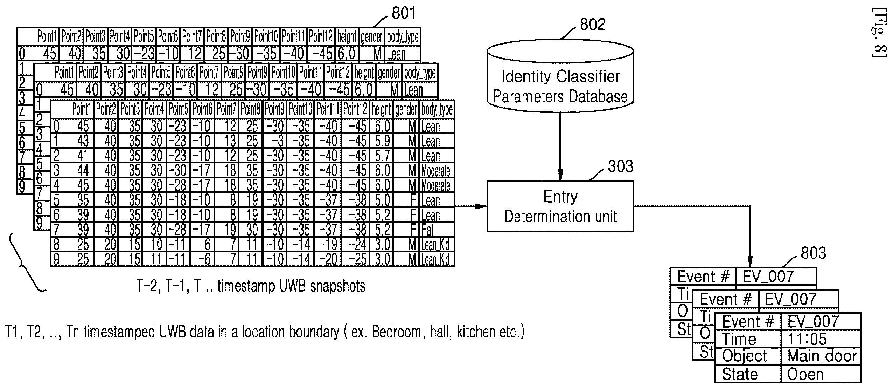

The electronic device 300 identifies possible hazardous locations inside the smart home environment due to subsequent activities of the user. The electronic device(300) may notify the user about possible hazardous locations inside the smart home environment. And also the electronic device (300) may provide solutions by using other devices (720) (e.g., speaker). A detailed explanation for identifying hazardous locations inside the smart home environment is explained with the help of FIG. 8 - FIG. 13 in forthcoming paragraphs.

In an embodiment, the entry determination unit 303 as shown in FIG. 8, detects an entry or exit of the user into the smart home environment. For detecting the entry or exit of the user, the UWB sensors 306 transmit signals towards the user passing or leaving an entry or exit of the smart home environment. The transmitted signals are reflected by the user and received at the UWB sensor 306 ends. The reflected signals have physiological properties of the user. The UWB sensors 306 further transmit the reflected signals to the entry determination unit 303. The entry determination unit 303 compares the received user's physical properties with predefined or pre-stored physiological properties of the one or more entities of the smart home environment. The physiological properties of the one or more entities are stored in the identity classifier database. After comparing the user's physiological properties with the predefined physiological properties of the one or more entities, the user entry is determined. Based on the user's physiological properties, the user is also identified as the smart home environment entity. The user entry time is also stored. This information is then further sent to the exposure determination unit 308 and the in-house monitoring unit 312.

According to an embodiment of the disclosure, the monitoring unit 301 periodically monitors the one or more entities using the UWB sensors 306 and generates a series of timestamp data 801. In a non-limiting example, the generated series of timestamp data 801 includes information of the one or more entities such as height, gender, etc. at a particular time stamped. The entry determination unit uses this information 303 for classifying the type of the one or more entities using the DNN & RNN model. Classified data is then stored in the identity classifier parameters database 802. The entry determination unit then further utilizes the information 303 for identification of an entity from the one or more entities of the smart home environment. For example, as shown in FIG. 8, the entity detected 803 is "Main door", and the entity is identified as the smart home environment entity.

Thereafter, the outside activity determination unit 305 of the electronic device 300 calculates at least the one or more outside activities performed by the user.

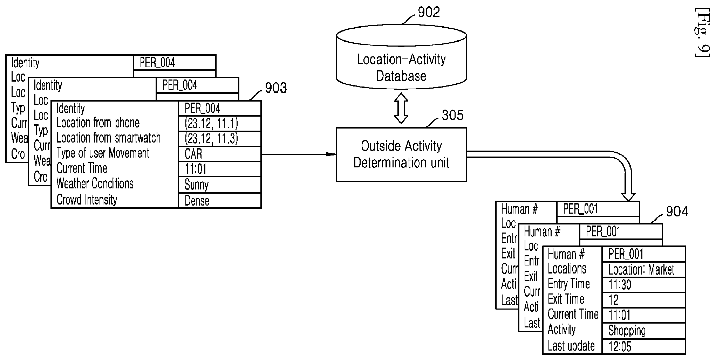

Referring back to FIG. 7, the outside activity determination unit 305 as shown in FIG. 9 may be configured to periodically receive at least the one or more outside activities performed by the user. The at least one outside activities are received from the user's electronic device 320. The outside activity determination unit 305 also receives information related to the time spent while performing at least the one or more outside activities. This information is stored in the location-activity database 902 and is then utilized by the outside activity determination unit 303 for detecting at least the one or more outside activities performed by the user.

Now, in an implementation, while the outside activity determination unit 305 continuously receives information from the monitoring unit 301, it generates a series of information 903. In-non-limiting example, the information 903 includes a type of movement of the one or more entities, etc. This information is used by the outside activity determination unit 305 for classifying type of outside activities using a reinforcement learning-based classification model. This information is then stored in location-activity database 902 and is further utilized by the outside activity determination unit 303 for determining at least the one or more outside activities performed by the one or more entities. The activity determination unit 303 also stores the time spent while performing the one or more outside activities, weather conditions, population density, etc. As shown in FIG. 9, in a non-limiting example, an outside activity 904 of the user is going to the market. The time spent in the market is decided by an entry time and exit time. The entry time was 11:30 and the exit time was 12. The weather condition was sunny.

Thereafter, the exposure determination unit 308 calculates an external exposure associated with at least the one or more outside activities performed by the user.

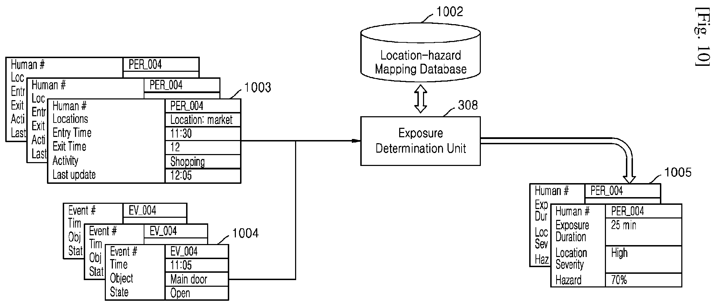

Referring back to FIG. 7, the exposure determination unit 308 as shown in FIG. 10 may be configured to calculate the external exposure associated with at least the one or more outside activities performed by the user. For calculating the external exposure, the exposure determination unit at the first operation, fetch the stored information of the at least one outside activity performed by the user from the location activity database 902. Thereafter, in the next operation, the exposure determination unit 308 calculates an external exposure contamination quotient for the user based on information related to an environmental health condition while performing at least the one or more outside activities. the environmental health condition information includes but not limited to population density information, weather condition information, humidity level information, dust information, pollen, or any kind of pollutants available. According to an embodiment, the environmental health condition is obtained from the user's electronic device 320. Thereafter, the exposure determination unit 308 fetches the time spent by the user while performing at least the one or more outside activities from the activity determination unit 303. Now, the external exposure contamination quotient includes both pieces of information e.g., the information related to the environmental health condition and the information related to the time spent by the user while performing at least the one or more outside activities. In a further operation, the exposure determination unit 308 calculates an external exposure level by correlating the fetched information and the external exposure contamination quotient. After calculating the external exposure level, the exposure determination unit 308 further determines a risk factor associated with the calculated external exposure. The risk factor may be determined by comparing the external exposure contamination quotient with a predefined threshold value. If the external exposure contamination quotient is more than the threshold value, the risk factor is determined as a high-level risk.

For example, in FIG. 9, the exposure determination unit 308 at the first opeartion determines that the outside activity of the user was going to the market. Then in the operation step, the exposure determination unit 308 finds the environmental health condition of the market. Then in the next operation, it checks the entry time and the exit time from the market. The entry time is 11:30 and the exit time is 12. Then in the next step, it correlates this information. After correlating, it calculates the exposure time. For example the exposure time of the user is 30 min. Since the total time spent in the market by the user was more than the predefined threshold value, the risk factor, in this case, is high. Further, based on the risk factor, the user is identified as the potential contamination carrier. According to an embodiment, the risk factor is decided by comparing the external exposure contamination quotient with a predefined threshold value.

Now, in an implementation, while the exposure determination unit 308 continuously receives information from the entry determination unit 303 and the outside activity determination unit 305, it generates a series of information 1003 and 1004. In-non-limiting example, the information 1003 includes the different locations visited by the one or more entities, time spent, the environmental health conditions at the visited locations, etc. The information 1004 and 1003 are used by the exposure determination unit 308 for classifying the external exposure contamination quotient using a Supervised ML model. As shown in FIG. 9, in a non-limiting example, the external exposure 1005 duration was 30 min, and the risk factor is high.

After calculating the external exposure, the in-house activity monitor unit 312 of the electronic device 300 further calculates a subsequent activity of the user after entering the smart home.

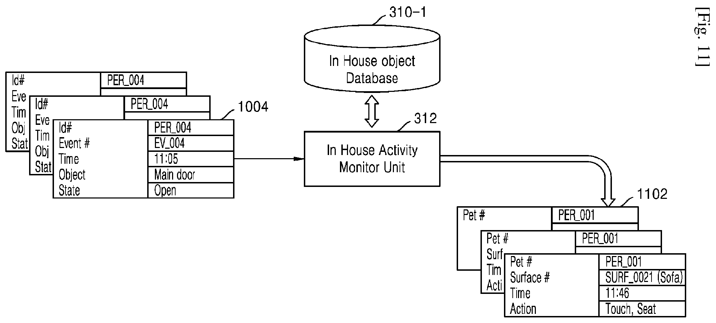

Referring back to FIG. 7, the in-house activity monitor unit 312 as shown in FIG. 11 is may be configured to monitor at least the one subsequent activity of the user after entering into the smart home environment. The entrance of the user into the smart home environment is decided by the information received from the entry determination unit 303. Thereafter, the in-house activity monitor unit 312 monitors the subsequent activities using the UWB sensors 306 present in the smart home environment. For monitoring subsequent activities of the user, the UWB sensors 306 transmit signals to the user. The UWB sensors 306 receive the physical properties of the user from reflected signals. The physical properties include Signal strength (SS), Time of arrival (ToA), and Angle of arrival (AoA).

The in-house activity monitor unit 312 further compares the received physical properties of the user with a plurality of predefined physical properties of the one or more entities stored in the in-house object database. The in-house activity monitor unit 312 further monitors the subsequent activities of the user based on the comparison. The subsequent activities may include but not limited to the movement of the user, placing one or more objects present in the smart home from one place to another place, coming near proximity of the one or more objects present in the smart home environment, keeping one or more outside object on the table, etc. As shown in FIG. 11, in a non-limiting example, the subsequent activity 1102 of the user is touching a seat present in the smart home.

In a further implementation, while the in-house activity monitor unit 312 continuously receives information from the entry determination unit 303, it generates a series of information 1004. In-non-limiting example, the information 1003 includes the movement of the user, placing one or more objects present in the smart home from one place to another place, etc. The information 1004 is used by the in house activity monitor unit 312 for tracking the user's subsequent activities by using the DNN & RNN classification model. As shown in FIG. 9, in a non-limiting example, the subsequent activity of the user is touching the seat.

After calculating a subsequent activity, the contamination tracker unit 314 identifies potentially hazardous or contaminated locations in the smart home environment.

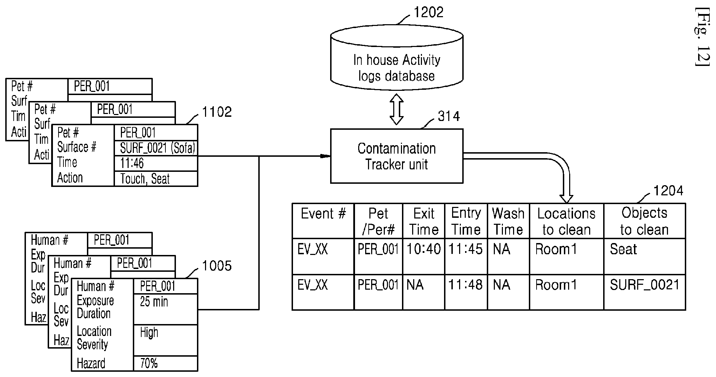

Referring back to FIG. 7, the contamination tracker unit 314 as shown in FIG. 12, may be configured to correlate the monitored subsequent activities 1102 of the user with the calculated external exposure information 1005. The contamination tracker unit 314 further identifies at least one of potentially hazardous location based on the correlated information. In other words, the contamination tracker unit 314 receives the monitored subsequent activities 1102 from the in-house activity monitor unit 312. The contamination tracker unit then further correlates the monitored subsequent activities of the user with the calculated external exposure information 1005. On correlating, both the information, the contamination tracker decides the potentially hazardous location in the smart home environment.

According to an embodiment, the contamination tracker unit 314 continuously receives information from the in-house activity monitor unit 312 and the outside activity determination unit 305, it generates a series of information 1102 and 1005. The information 1102 and 1005 is used by the exposure determination unit 308 for classifying the potential hazardous locations in the smart home environment using a Supervised ML model. As shown in FIG. 9, in a non-limiting example, for example, in FIG. 12 the subsequent activity 1204 of the user is touching the seat. The potential hazardous location in the smart home environment is the seat. Thereafter, the contamination tracker unit sends this information to the action recommender unit 316.

Referring back to FIG. 7, the action prioritization & recommender unit 316 may be configured to determine at least one of corrective action to mitigate the risk associated with the potentially identified hazardous locations within the smart home environment. The action prioritization & recommender unit 316 further recommends a corrective action to mitigate the risk associated with the potentially identified hazardous locations within the smart home environment. Based on the recommendations, the action prioritization & recommender unit 316 further recommends taking one or more actions. The one or more actions may include but not limited to cleaning from available devices like robot-cleaner, air purifiers, etc.

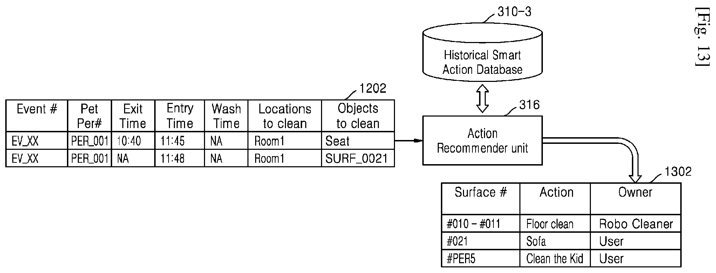

In a further implementation, while the action prioritization & recommender unit 316 continuously receives information 1202 from the contamination tracker unit, the unit 316 generates a series of information regarding corrective actions. The information is used by the action prioritization & recommender unit 316 for classifying the corrective actions using a Reinforcement learning model. As shown in FIG. 13, in a non-limiting example, the corrective action 1302 recommended is to clean the sofa with the robot cleaner.

In an embodiment, the electronic device 300 further includes the feedback analyzer unit 318. The feedback analyzer unit 318 monitors the corrective actions taken to understand the action prioritization & recommender unit 316 recommendation efficacy. The feedback analyzer unit 318 also adjusts weights of a reinforcement model prepared for the recommendation.

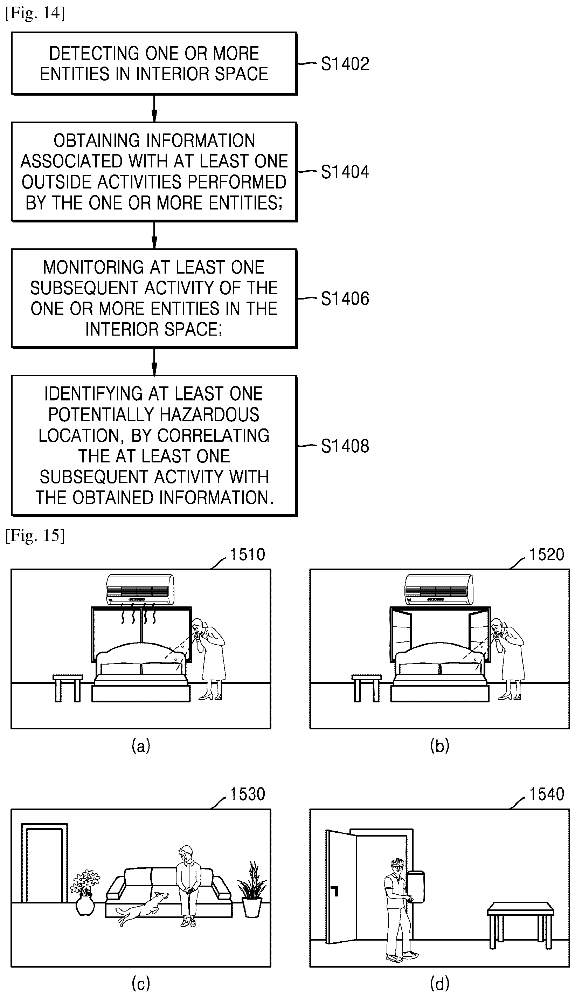

FIG. 14 illustrates a flow chart for implementation in the electronic device for identifying the hazardous locations, according to an embodiment of the present disclosure. According to an embodiment, the method 1400 is implemented in the electronic device 300. The detailed explanation and implementation are being explained through FIG. 3 - FIG. 13, thus for the sake of brevity, the same is being omitted here.

At operation S1402, the method 1400 includes detecting one or more entities in interior space. The method 1400 may include detecting an entry of one or more entities into the smart home environment using one or more sensors present in the smart home environment.

According to an embodiment, the interior space may include places where the user(s) stay, live, or work (e.g., smart home, office, shop, etc). The interior space may be contaminated by various causes, and need to be cleaned up for the user(s).

Thereafter, at operation S1404, the method 1400 includes obtaining information associated with at least one outside activity performed by the one or more entities. The method 1400 may include retrieving information corresponding to an external exposure associated with at least one outside activity performed by the detected one or more entities.

According to an embodiment, the at least one outside activity may include any activity that the user(s) performed in the place except the interior space. For example, the at least one outside activity may include taking out trash, walking the dog, shopping at a mart, exercising, working and the like.

Thereafter, at operation S1406, the method 1400 includes monitoring at least one subsequent activity of the one or more entities in the interior space. The method 1400 may include monitoring at least one subsequent activity of the detected one or more entities after entering the smart home environment using the one or more sensors present in the smart home environment.

According to an embodiment, the at least one subsequent activity may include all activities that user(s) performed after entering in the interior space after the outside activity. For example, the at least one subsequent activity may include washing hand, cooking, lying on a sofa, changing clothes and the like.

Thereafter, at operation S1408, the method 1400 includes identifying at least one potentially hazardous location, by correlating the at least one subsequent activity with the obtained information. The method 1400 may include identifying at least one potentially hazardous location within the smart home environment, by correlating the monitored at least one subsequent activity with the retrieved information corresponding to the external exposure.

Various exemplary scenarios will be explained henceforth. FIG. 15 illustrates various examples scenarios for implementation in the system for identifying the hazardous locations within the smart home. According to example scenario (a) (1510), a first user of a smart home sneezes in his bedroom within 30 minutes of entering the smart home environment. Accordingly, initially, the monitoring unit 301 monitors the outside activity of the first user. Thereafter, the outside activity determination unit 305 determines that the outside activity of the first user is sneezing. Thereafter, the entry determination unit 303 determines that the entity is a bed, and AC which is in on condition. Thereafter, the exposure determination unit 308 determines that there is a high exposure for the bed. Thereafter, the in-house monitoring unit 312 monitors that a second user immediately sits on the bed which was contaminated due to the droplet of sneezing of the first user. Thereafter, the contamination tracker unit 314 monitors that the first user is affecting the second user due to contamination. Thereafter, the action recommender unit 316 recommends to the second user that there is a chance of having a cold due to contamination from the first user.

According to example scenario (b) (1520), identification of the hazardous location or contaminated area is a bed and no recommendation is made. Accordingly, initially, the monitoring unit 301 monitors the outside activity of the first user. Thereafter, the outside activity determination unit 305 determines that the first user sneezes within 30 min after entering the bedroom of the smart home, but window was open, and there was no downward AC airflow. Thereafter, the entry determination unit 303 determines that the entity is the bed, and the AC is off. Thereafter, the exposure determination unit 308 determines that there is a high exposure for the bed. Thereafter, the in-house monitoring unit 312 monitors that a second user sits on the bed after 10 min which was contaminated due to the droplet of sneezing of the first user. Thereafter, the contamination tracker unit 314 monitors that the second user comes in contact post high contamination time. Thereafter, the action recommender unit 316 does not recommends anything to the second user because there was a gap of 10 mins and the window was also open.

According to example scenario (c) (1530) identification of the hazardous location or contaminated area when a pet enters and jumps on sofa of the smart home environment. Accordingly, initially, the monitoring unit 301 monitors outside activity of the pet. Thereafter, the outside activity determination unit 305 determines that the outside activity of the pet is playing. Thereafter, the entry determination unit 303 determines that the entity is the pet. Thereafter, the exposure determination unit 308 determines that there is a medium exposure. Thereafter, the in-house monitoring unit 312 monitors that a kid comes and sits on the sofa after 3 min which was contaminated due to jumping off the pet. Thereafter, the contamination tracker unit 314 monitors the sofa surface contamination by the pet's activity. Thereafter, the action recommender unit 316 recommends for cleaning the sofa and the kids.

According to example scenario (d) (1540) identification of the hazardous location or contaminated area when a person enters the smart home with a garbage bag after disposal of the garbage. Accordingly, initially, the monitoring unit 301 monitors the outside activity of the person. Thereafter, the outside activity determination unit 305 determines that the outside activity of the person is the disposal of the garbage. Thereafter, the entry determination unit 303 determines that the entity is the person. Thereafter, the exposure determination unit 308 determines that there is a high exposure due to the garbage bag. Thereafter, the in-house monitoring unit 312 monitors that there is an odor from the garbage bag and floor tiles are contaminated due to the garbage bag. Thereafter, the contamination tracker unit 314 monitors that surface of the floor tiles is contaminated by the person's activity. Thereafter, the action recommender unit 316 recommends cleaning the surface of the floor tiles using a robot cleaner, and to start an air purifier to purify contaminated air.

Some example embodiments disclosed herein may be implemented using processing circuitry. For example, some example embodiments disclosed herein may be implemented using at least one software program running on at least one hardware device and performing network management functions to control the elements.

While specific language has been used to describe the disclosure, any limitations arising on account of the same are not intended. As would be apparent to a person in the art, various working modifications may be made to the method in order to implement the inventive concept as taught herein.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

## Claims

1. A method to be performed by an electronic device (300), for identifying potential hazardous locations, the method comprising:
detecting one or more entities in an interior space;
obtaining information associated with at least one outside activity performed by the one or more entities;
monitoring at least one subsequent activity of the one or more entities in the interior space; and
identifying at least one potentially hazardous location contaminated by the one or more entities by correlating the at least one subsequent activity with the obtained information.

2. The method of claim 1, wherein the detecting of the one or more entities in the interior space further comprises:
transmitting signals towards the one or more entities;
receiving reflected signals from the one or more entities;
obtaining properties of the one or more entities based on multiple angular values of the reflected signals;
comparing the obtained properties of the one or more entities with a plurality of predefined properties of the one or more entities stored in a database (310); and
detecting the one or more entities based on result of the comparison.

3. The method of any one of claims 1 to 2, wherein the identifying of the at least one potentially hazardous location comprises
obtaining information related to an environmental health condition of visited places based on the information associated with at least one outside activity;
calculating an external exposure contamination quotient for the one or more entities based on the information related to an environmental health condition of visited places; and
calculating an external exposure by correlating the obtained information related to the environmental health condition and the external exposure contamination quotient.

4. The method of claim 3, wherein the information related to the environmental health condition of the visited places includes at least one of population density of the visited places, weather condition information of the visited places, humidity level information of the visited places, dust information, pollen, or any kind of pollutants available at the visited places.

5. The method of any one of claims 1 to 4, wherein the information associated with at least one outside activity includes at least one of places visited by the one or more entities or total time spent while performing actions at the visited places by the one or more entities.

6. The method of any of claim 3 to 4, or claim 5 when dependent on claim 3 or 4, wherein the identifying of the at least one potentially hazardous locations comprises
correlating the subsequent activity with the calculated external exposure; and
identifying the at least one potentially hazardous location based on result of the correlation.

7. The method of any one of claims 1 to 6, the method further comprising:
determining at least one corrective action associated with the at least one potentially hazardous location based on a weight of the at least one corrective action;
providing information related to the at least one corrective action; and
updating the weight of the at least one corrective action based on feedback information related to the at least one corrective action.

8. An electronic device (300) for identifying potential hazardous locations within a smart home environment comprising:
a memory (304); and
at least one processor (302) coupled with the memory (304), the at least one processor (302) is configured to:
detect one or more entities in an interior space;
obtain information associated with at least one outside activity performed by the one or more entities;
monitor at least one subsequent activity of the one or more entities in the interior space; and
identify at least one potentially hazardous location contaminated by the one or more entities by correlating the at least one subsequent activity with the obtained information.

9. The electronic device (300) of claim 8, wherein the at least one processor (302) is configured to:
transmit signals towards the one or more entities;
receive reflected signals from the one or more entities;
obtain properties of the one or more entities based on multiple angular values of the reflected signals;
compare the obtained properties of the one or more entities with a plurality of predefined properties of the one or more entities stored in a database (310); and
detect the one or more entities based on result of the comparison.

10. The electronic device (300) of any one of claims 8 to 9, wherein the at least one processor (302) is configured to:
obtain information related to an environmental health condition of visited places based on the information associated with at least one outside activity;
calculate an external exposure contamination quotient for the one or more entities based on information related to the environmental health condition of visited places; and
calculate an external exposure by correlating the obtained information related to the environmental health condition and the external exposure contamination quotient.

11. The electronic device (300) of claim 10, wherein the information related to the environmental health condition of the visited places includes at least one of population density of the visited places, weather condition information of the visited places, humidity level information of the visited places, dust information, pollen, or any kind of pollutants available at the visited places.

12. The electronic device (300) of any one of claims 8 to 11, wherein the information associated with at least one outside activity includes at least one of places visited by the one or more entities or total time spent while performing actions at the visited places by the one or more entities.

13. The electronic device (300) of any one of claim 10 to 11, or claim 12 when dependent on claim 10 or 11, wherein the processor (302) is configured to:
correlate the subsequent activities with the calculated external exposure; and
identify the at least one potentially hazardous locations based on result of the correlation.

14. The electronic device (300) of any one of claims 8 to 13, wherein the at least one processor (302) is further configured to:
determine at least one corrective action associated with the at least one potentially identified hazardous location based on a weight of the at least one corrective action;
provide information related to the at least one corrective action; and
update the weight of the at least one corrective action based on feedback information related to the at least one corrective action.

15. A machine-readable medium containing instructions that, when executed, cause at least one processor of a device to perform operations corresponding to the method of any one of claims 1-7.

## Patentansprüche

1. Verfahren, das durch eine elektronische Vorrichtung (300) durchzuführen ist, zum Identifizieren potenzieller gefährlicher Stellen, wobei das Verfahren Folgendes umfasst:
Erkennen einer oder mehrerer Entitäten in einem Innenraum;
Erlangen von Informationen, die mindestens einer Außenaktivität zugeordnet sind, die durch die eine oder die mehreren Entitäten durchgeführt wird;
Überwachen mindestens einer nachfolgenden Aktivität der einen oder mehreren Entitäten in dem Innenraum; und
Identifizieren mindestens einer potenziell gefährlichen Stelle, die durch die eine oder die mehreren Entitäten kontaminiert ist, durch Korrelieren der mindestens einen nachfolgenden Aktivität mit den erlangten Informationen.

2. Verfahren nach Anspruch 1, wobei das Erkennen der einen oder der mehreren Entitäten in dem Innenraum ferner Folgendes umfasst:
Übertragen von Signalen zu der einen oder den mehreren Entitäten hin;
Empfangen reflektierter Signale von der einen oder den mehreren Entitäten;
Erlangen von Eigenschaften der einen oder der mehreren Entitäten basierend auf mehreren Winkelwerten der reflektierten Signale;
Vergleichen der erlangten Eigenschaften der einen oder mehreren Entitäten mit einer Vielzahl vordefinierter Eigenschaften der einen oder mehreren Entitäten, die in einer Datenbank (310) gespeichert sind; und
Erkennen der einen oder mehreren Entitäten basierend auf einem Ergebnis des Vergleichs.

3. Verfahren nach einem der Ansprüche 1 bis 2, wobei das Identifizieren der mindestens einen potenziell gefährlichen Stelle Folgendes umfasst:
Erlangen von Informationen, die sich auf einen Umweltgesundheitszustand besuchter Orte beziehen, basierend auf den Informationen, die mindestens einer Außenaktivität zugeordnet sind,
Berechnen eines externen Expositionskontaminationsquotienten für die eine oder die mehreren Entitäten basierend auf den Informationen, die sich auf einen Umweltgesundheitszustand besuchter Orte beziehen; und
Berechnen einer externen Exposition durch Korrelieren der erlangten Informationen die sich auf den Umweltgesundheitszustand beziehen, und des externen Expositionskontaminationsquotienten.

4. Verfahren nach Anspruch 3, wobei die Informationen, die sich auf den Umweltgesundheitszustand der besuchten Orte beziehen, mindestens eines von Bevölkerungsdichte der besuchten Orte, Wetterzustandsinformationen der besuchten Orte, Feuchtigkeitsniveauinformationen der besuchten Orte, Staubinformationen, Pollen oder einer beliebigen Art von Schadstoffen, die an den besuchten Orten vorhanden sind, enthalten.

5. Verfahren nach einem der Ansprüche 1 bis 4, wobei die Informationen, die mindestens einer Außenaktivität zugeordnet sind, mindestens eines von Orten, die durch die eine oder die mehreren Entitäten besucht wurden, oder einer Gesamtzeit, die während des Durchführens von Aktionen an den besuchten Orten durch die eine oder die mehreren Entitäten verbracht wurde, enthalten.

6. Verfahren nach einem der Ansprüche 3 bis 4 oder Anspruch 5, wenn abhängig von Anspruch 3 oder 4, wobei das Identifizieren der mindestens einen potenziell gefährlichen Stelle Folgendes umfasst:
Korrelieren der nachfolgenden Aktivität mit der berechneten externen Exposition; und
Identifizieren der mindestens einen potenziell gefährlichen Stelle basierend auf dem Ergebnis der Korrelation.

7. Verfahren nach einem der Ansprüche 1 bis 6, wobei das Verfahren ferner Folgendes umfasst:
Bestimmen mindestens einer Korrekturaktion, die dem mindestens einen potenziell gefährlichen Ort zugeordnet ist, basierend auf einem Gewicht der mindestens einen Korrekturaktion;
Bereitstellen von Informationen in Bezug auf die mindestens eine Korrekturaktion; und
Aktualisieren des Gewichts der mindestens einen Korrekturaktion basierend auf Feedbackinformationen, die sich auf die mindestens eine Korrekturaktion beziehen.

8. Elektronische Vorrichtung (300) zum Identifizieren potenzieller gefährlicher Stellen innerhalb einer Smart-Home-Umgebung, umfassend:
einen Speicher (304); und
mindestens einen Prozessor (302), der mit dem Speicher (304) gekoppelt ist, wobei der mindestens eine Prozessor (302) zu Folgendem konfiguriert ist:
Erkennen einer oder mehrerer Entitäten in einem Innenraum;
Erlangen von Informationen, die mindestens einer Außenaktivität zugeordnet sind, die durch die eine oder die mehreren Entitäten durchgeführt wird;
Überwachen mindestens einer nachfolgenden Aktivität der einen oder mehreren Entitäten in dem Innenraum; und
Identifizieren mindestens einer potenziell gefährlichen Stelle, die durch die eine oder die mehreren Entitäten kontaminiert ist, durch Korrelieren der mindestens einen nachfolgenden Aktivität mit den erlangten Informationen.

9. Elektronische Vorrichtung (300) nach Anspruch 8, wobei der mindestens eine Prozessor (302) zu Folgendem konfiguriert ist:
Übertragen von Signalen zu der einen oder den mehreren Entitäten hin;
Empfangen reflektierter Signale von der einen oder den mehreren Entitäten;
Erlangen von Eigenschaften der einen oder der mehreren Entitäten basierend auf mehreren Winkelwerten der reflektierten Signale;
Vergleichen der erlangten Eigenschaften der einen oder mehreren Entitäten mit einer Vielzahl vordefinierter Eigenschaften der einen oder mehreren Entitäten, die in einer Datenbank (310) gespeichert sind; und
Erkennen der einen oder mehreren Entitäten basierend auf einem Ergebnis des Vergleichs.

10. Elektronische Vorrichtung (300) nach einem der Ansprüche 8 bis 9, wobei der mindestens eine Prozessor (302) zu Folgendem konfiguriert ist:
Erlangen von Informationen, die sich auf einen Umweltgesundheitszustand besuchter Orte beziehen, basierend auf den Informationen, die mindestens einer Außenaktivität zugeordnet sind;
Berechnen eines externen Expositionskontaminationsquotienten für die eine oder die mehreren Entitäten basierend auf Informationen, die sich auf den Umweltgesundheitszustand besuchter Orte beziehen; und
Berechnen einer externen Exposition durch Korrelieren der erlangten Informationen die sich auf den Umweltgesundheitszustand beziehen, und des externen Expositionskontaminationsquotienten.

11. Elektronische Vorrichtung (300) nach Anspruch 10, wobei die Informationen, die sich auf den Umweltgesundheitszustand der besuchten Orte beziehen, mindestens eines von Bevölkerungsdichte der besuchten Orte, Wetterzustandsinformationen der besuchten Orte, Feuchtigkeitsniveauinformationen der besuchten Orte, Staubinformationen, Pollen oder einer beliebigen Art von Schadstoffen, die an den besuchten Orten vorhanden sind, enthalten.

12. Elektronische Vorrichtung (300) nach einem der Ansprüche 8 bis 11, wobei die Informationen, die mindestens einer Außenaktivität zugeordnet sind, mindestens eines von Orten, die durch die eine oder die mehreren Entitäten besucht wurden, oder einer Gesamtzeit, die während des Durchführens von Aktionen an den besuchten Orten durch die eine oder die mehreren Entitäten verbracht wurde, enthalten.

13. Elektronische Vorrichtung (300) nach einem der Ansprüche 10 bis 11 oder Anspruch 12, wenn abhängig von Anspruch 10 oder 11, wobei der Prozessor (302) zu Folgendem konfiguriert ist:
Korrelieren der nachfolgenden Aktivitäten mit der berechneten externen Exposition; und
Identifizieren der mindestens einen potenziell gefährlichen Stellen basierend auf dem Ergebnis der Korrelation.

14. Elektronische Vorrichtung (300) nach einem der Ansprüche 8 bis 13, wobei der mindestens eine Prozessor (302) ferner zu Folgendem konfiguriert ist:
Bestimmen mindestens einer Korrekturaktion, die dem mindestens einen potenziell identifizierten gefährlichen Ort zugeordnet ist, basierend auf einem Gewicht der mindestens einen Korrekturaktion;
Bereitstellen von Informationen in Bezug auf die mindestens eine Korrekturaktion; und
Aktualisieren des Gewichts der mindestens einen Korrekturaktion basierend auf Feedbackinformationen, die sich auf die mindestens eine Korrekturaktion beziehen.

15. Maschinenlesbares Medium, das Anweisungen beinhaltet, die, wenn sie ausgeführt werden, bewirken, dass mindestens ein Prozessor einer Vorrichtung Operationen entsprechend dem Verfahren nach einem der Ansprüche 1-7 durchführt.

## Revendications

1. Procédé devant être réalisé par un dispositif électronique (300), destiné à identifier des emplacements potentiellement dangereux, le procédé comprenant :
la détection d'une ou de plusieurs entités dans un espace intérieur ;
l'obtention d'informations associées à au moins une activité extérieure réalisée par les une ou plusieurs entités ;
la surveillance d'au moins une activité ultérieure des une ou plusieurs entités dans l'espace intérieur ; et
l'identification d'au moins un emplacement potentiellement dangereux contaminé par les une ou plusieurs entités en corrélant l'au moins une activité ultérieure avec les informations obtenues.

2. Procédé de la revendication 1, dans lequel la détection des une ou plusieurs entités dans l'espace intérieur comprend en outre :
la transmission de signaux vers les une ou plusieurs entités ;
la réception de signaux réfléchis en provenance des une ou plusieurs entités ;
l'obtention de propriétés des une ou plusieurs entités sur la base de multiples valeurs angulaires des signaux réfléchis ;
la comparaison des propriétés obtenues des une ou plusieurs entités avec une pluralité de propriétés prédéfinies des une ou plusieurs entités stockées dans une base de données (310) ; et
la détection des une ou plusieurs entités sur la base du résultat de la comparaison.

3. Procédé de l'une quelconque des revendications 1 à 2, dans lequel l'identification de l'au moins un emplacement potentiellement dangereux comprend
l'obtention d'informations liées à un état sanitaire environnant de lieux visités sur la base des informations associées à au moins une activité extérieure ;
le calcul d'un quotient de contamination par exposition externe pour les une ou plusieurs entités sur la base des informations liées à un état sanitaire environnant de lieux visités ; et
le calcul d'une exposition externe en corrélant les informations liées à l'état sanitaire environnant obtenues et le quotient de contamination par exposition externe.

4. Procédé de la revendication 3, dans lequel les informations liées à l'état sanitaire environnant des lieux visités comprennent au moins l'une d'une densité de population des lieux visités, d'informations sur les conditions météorologiques des lieux visités, d'informations sur le niveau d'humidité des lieux visités, d'informations sur de la poussière, du pollen ou sur tout type de polluants disponibles au niveau des lieux visités.

5. Procédé de l'une quelconque des revendications 1 à 4, dans lequel les informations associées à au moins une activité extérieure comprennent au moins l'un de lieux visités par les une ou plusieurs entités ou du temps total passé tout en réalisant des actions au niveau des lieux visités par les une ou plusieurs entités.

6. Procédé de l'une quelconque des revendications 3 à 4, ou de la revendication 5 lorsqu'elle dépend de la revendication 3 ou 4, dans lequel identification de l'au moins un emplacement potentiellement dangereux comprend la corrélation de l'activité ultérieure avec l'exposition externe calculée ; et
l'identification de l'au moins un emplacement potentiellement dangereux sur la base du résultat de la corrélation.

7. Procédé de l'une quelconque des revendications 1 à 6, le procédé comprenant en outre :
la détermination d'au moins une action corrective associée à l'au moins un emplacement potentiellement dangereux sur la base d'une pondération de l'au moins une action corrective ;
la fourniture d'informations liées à l'au moins une action corrective ; et
la mise à jour de la pondération de l'au moins une action corrective sur la base d'informations de rétroaction liées à l'au moins une action corrective.

8. Dispositif électronique (300) destiné à identifier des emplacements potentiellement dangereux dans un environnement de maison intelligente comprenant :
une mémoire (304) ; et
au moins un processeur (302) couplé à la mémoire (304), l'au moins un processeur (302) est configuré pour :
détecter une ou plusieurs entités dans un espace intérieur ;
obtenir des informations associées à au moins une activité extérieure réalisée par les une ou plusieurs entités ;
surveiller au moins une activité ultérieure des une ou plusieurs entités dans l'espace intérieur ; et
identifier au moins un emplacement potentiellement dangereux contaminé par les une ou plusieurs entités en corrélant l'au moins une activité ultérieure avec les informations obtenues.

9. Dispositif électronique (300) de la revendication 8, dans lequel l'au moins un processeur (302) est configuré pour :
transmettre des signaux vers les une ou plusieurs entités ;
recevoir des signaux réfléchis en provenance des une ou plusieurs entités ;
obtenir des propriétés des une ou plusieurs entités sur la base de multiples valeurs angulaires des signaux réfléchis ;
comparer des propriétés obtenues des une ou plusieurs entités avec une pluralité de propriétés prédéfinies des une ou plusieurs entités stockées dans une base de données (310) ; et
détecter les une ou plusieurs entités sur la base du résultat de la comparaison.

10. Dispositif électronique (300) de l'une quelconque des revendications 8 à 9, dans lequel l'au moins un processeur (302) est configuré pour :
obtenir des informations liées à un état sanitaire environnant de lieux visités sur la base des informations associées à au moins une activité extérieure ;
calculer un quotient de contamination par exposition externe pour les une ou plusieurs entités sur la base d'informations liées à l'état sanitaire environnant de lieux visités ; et
calculer une exposition externe en corrélant les informations liées à l'état sanitaire environnant obtenues et le quotient de contamination par exposition externe.

11. Dispositif électronique (300) de la revendication 10, dans lequel les informations liées à l'état sanitaire environnant des lieux visités comprennent au moins l'une d'une densité de population des lieux visités, d'informations sur les conditions météorologiques des lieux visités, d'informations sur le niveau d'humidité des lieux visités, d'informations sur de la poussière, du pollen ou sur tout type de polluants disponibles au niveau des lieux visités.

12. Dispositif électronique (300) de l'une quelconque des revendications 8 à 11, dans lequel les informations associées à au moins une activité extérieure comprennent au moins l'un de lieux visités par les une ou plusieurs entités ou du temps total passé tout en réalisant des actions au niveau des lieux visités par les une ou plusieurs entités.

13. Dispositif électronique (300) de l'une quelconque des revendications 10 à 11, ou de la revendication 12 lorsqu'elle dépend de la revendication 10 ou 11, dans lequel le processeur (302) est configuré pour :
corréler les activités ultérieures avec l'exposition externe calculée ; et
identifier l'au moins un emplacement potentiellement dangereux sur la base du résultat de la corrélation.

14. Dispositif électronique (300) de l'une quelconque des revendications 8 à 13, dans lequel l'au moins un processeur (302) est en outre configuré pour :
déterminer au moins une action corrective associée à l'au moins un emplacement potentiellement dangereux identifié sur la base d'une pondération de l'au moins une action corrective ;
fournir des informations liées à l'au moins une action corrective ; et
mettre à jour la pondération de l'au moins une action corrective sur la base d'informations de rétroaction liées à l'au moins une action corrective.

15. Support lisible par machine contenant des instructions qui, lorsqu'elles sont exécutées, amènent au moins un processeur d'un dispositif à réaliser des opérations correspondant au procédé de l'une quelconque des revendications 1 à 7.
